Europäisches Patentamt

(19) European Patent Office

Office européen des brevets

(11) Veröffentlichungsnummer: **0 112 347**
**B1**

(12) **EUROPÄISCHE PATENTSCHRIFT**

(45) Veröffentlichungstag der Patentschrift:
23.11.88

(51) Int. Cl.⁴: **G 02 B 17/06**, G 01 N 21/25

(21) Anmeldenummer: 83901891.8

(22) Anmeldetag: 23.06.83

(86) Internationale Anmeldenummer:
PCT/CH 83/00080

(87) Internationale Veröffentlichungsnummer:
WO 84/00217 (19.01.84 Gazette 84/02)

(54) **LICHTSAMMEL-VORRICHTUNG UND DEREN ANWENDUNG FÜR SPEKTROSKOPISCHE ZWECKE.**

(30) Priorität: 25.06.82 CH 3939/82
14.05.83 CH 2654/83

(43) Veröffentlichungstag der Anmeldung:
04.07.84 Patentblatt 84/27

(45) Bekanntmachung des Hinweises auf die Patenterteilung:
23.11.88 Patentblatt 88/47

(84) Benannte Vertragsstaaten:
AT BE CH DE FR GB LI LU NL SE

(56) Entgegenhaltungen:
WO-A-82/02950
DE-A-2 217 421
GB-A-514 201
US-A-3 562 524
US-A-3 959 660

(73) Patentinhaber: OEHLER, Oskar, Streulistrasse 24,
CH- 8032 Zürich (CH)
Patentinhaber: SOURLIER, David, Zweierstrasse 8,
CH- 5443 Niederrohrdorf (CH)

(72) Erfinder: OEHLER, Oskar, Streulistrasse 24, CH-
8032 Zürich (CH)
Erfinder: SOURLIER, David, Zweierstrasse 8, CH-
5443 Niederrohrdorf (CH)
Erfinder: FRIES, Alexis, In der Lachen 11, CH- 8953
Dietikon (CH)

(74) Vertreter: Frei, Alexandra Sarah, c/o Frei
Patentanwaltsbüro Hedwigsteig 6 Postfach 95,
CH- 8029 Zürich (CH)

**Beschreibung**

Die Erfindung liegt auf den Gebieten der geometrischen Optik und der optischen Spektroskopie. Sie betrifft eine Vorrichtung zur Sammlung der Strahlung, die von einer Lichtquelle im Innern eines konkaven Reflektors ausgeht, zu einem engen, quasiparallelen Strahlenbündel und die Anwendung dieser Vorrichtung für optisch-spektroskopische Zwecke, insbesondere zur Detektion von Gasen.

Konkavspiegel sind wohlbekannt zur Sammlung der Strahlung von Lichtquellen. Insbesondere werden sphärische, elliptische und parabolische Reflektoren häufig verwendet, wobei den beiden letzteren Vorrichtungen besondere Bedeutung zukommt.

Es soll vorerst auf die elliptische Hohlspiegel näher eingegangen werden. Solche Reflektionsvorrichtungen werden sehr oft eingesetzt, wenn die Strahlung einer kleinen Lichtquelle mit hohem Wirkungsgrad auf ein Target fokussiert werden soll. Zu diesem Zweck werden Lichtquellen und Target in den beiden gegenüberliegenden Brennpunkten angeordnet. Eine praktische Anwendung ist beispielsweise die Anregung des Rubin-Lasers: Der eine Brennpunkt befindet sich in der Anregungs-Lichtquelle und der andere ist in den, die Lasercavity bildenden, Rubinstab verlegt. Es sei in diesem Zusammenhang etwa auf das Buch von B.A. Lengyet, über "Laser", Wiley Publ. 1971, hingewiesen.

Es wird bei dieser Anwendung von der Tatsache ausgegangen, dass jeder Strahl, der vom einen Brennpunkt ausgeht, nach einer Reflexion in den anderen Brennpunkt fällt. Es kann damit ein sehr grosser Wirkungsgrad der Strahlungsintensitäts-Übertragung erzielt werden. Allerdings ist das Lichtbündel stark divergent, falls Strahlung aus einem grossen Raumwinkel eingefangen wird. Diese Divergenz kann oft nicht in Kauf genommen werden - beispielsweise dann nicht, wenn das Licht in einem Monochromator zerlegt werden soll.

Die effiziente Bildung eines quasi-parallelen Strahles mittels eines ellipsoid-förmigen Reflektors ist in der WO-82/2950 beschrieben. Es wird nicht nur eine einzige Reflexion am Ellipsoid-Hohlspiegel betrachtet, sondern man geht davon aus, dass das Licht nach einer zweiten Reflexion an der Reflektorfläche wieder in die Quelle zurückgeworfen wird und diese teilweise durchdringt. Die Ellipsoidfläche hat somit die Doppelaufgabe, einerseits als Reflektor das Licht der Quelle, die sich im einen Brennpunkt befindet, in den anderen Brennpunkt zu leiten, andererseits als Rückstrahlreflektor die Strahlung wieder in die Quelle zurückzuwerfen. Die Lichtsammlung beruht nun darauf, dass sich alle Lichtstrahlen, die von einem Brennpunkt ausgehen, mit zunehmender Anzahl Reflexionen an der Ellipsoid-Spiegelfläche und Lichtquellen-Durchdringungen asymptotisch der grossen Hauptachse nähern. Es findet somit eine Lichtsammlung längs dieser Achse statt. Das Strahlenbündel wird durch eine kleine Öffnung mit Durchmesser D, die in Verlängerung dieser grossen Hauptachse A angebracht ist, ausgekoppelt. Versuche wurden an einem gestreckten Rotationsellipsoid, also für den Fall, dass A zugleich Rotationsachse ist und demzufolge die andern beiden Hauptachsen gleiche Länge B besitzen, durchgeführt.

Für $A/B = 1.2$ und $D/B = 0.1$ ergab sich, dass 30 % des Lichtes einer im einen Brennpunkt angeordneten Glühwendel ausgekoppelt werden konnte, wobei das emittierte Licht innerhalb eines Konus von 15° lag.

Ein Nachteil der Konstruktion liegt darin, dass der Lichtstrahl jeweils nach 2, 4, 6, ... Reflexionen die im einen Brennpunkt angebrachte Lichtquelle durchdringen muss. Wegen der nicht vollständigen Transparenz der Lichtquelle - im Falle einer Glühwendel beträgt dieselbe ca. 70 % - wird der Wirkungsgrad der Lichtsammel-Vorrichtung reduziert.

Ferner müssen die geometrischen Abmessungen der Vorrichtung recht gross gewählt werden, da eine gute Lichtausbeute nur gewährleistet ist, falls die Dimensionen des Reflektors gross sind gegenüber denjenigen der Strahlungsquelle.

Es ist oft wünschenswert, die Lichtstrahlung auf eine kleine kreisfömige oder quadratische Fläche zu konzentrieren, beispielsweise auf die lichtempfindliche Fläche eines Photodetektors. Gelegentlich stellt sich aber das Problem, ein linear ausgedehntes Element, beispielsweise eine Spaltblende zu beleuchten. Für diesen letzteren Fall stellen die besprochenen, rotationssymmetrischen Reflektorvorrichtungen bezüglich Lichtausbeute keine optimale Lösung dar.

Das obige Licht-Kollimationsverfahren setzt wie erwähnt, eine teilweise transparente Strahlungsquelle voraus. Eine Quelle mit dieser Eigenschaft kann recht befriedigend durch eine Glühwendel realisiert werden. Da der Wirkungsgrad des Reflektors für eine seitliche Verschiebung des Lichtpunktes aus dem Brennpunkt stark abfällt, muss die Wendel sehr dünn gehalten und genau in der Ellipsoid-Hauptachse adjustiert werden. Die verlangte Dünnheit der Glühwendel bedeutet aber eine einschneidende Beschränkung ihrer elektrischen Belastbarkeit und somit auch eine Beschränkung der Lichtleistung der Quelle.

Die Positionierung der Wendel längs der Hauptachse entspricht einer Adjustierung in zwei Dimensionen - eine Forderung, die beachtlichen Aufwand bedeutet.

Bei gewissen Anwendungen ist ein enger, möglichst paralleler Lichtstrahl oft wünschenswert. Ausgehend von einer kleindimensionierten Lichtquelle kann ein Parallelstrahl dadurch erzeugt werden, dass die Quelle beim Brennpunkt eines parabolischen Reflektors angeordnet wird.

Falls eine gute Parallelität des Strahlenbündels verlangt wird, so müssen die Dimensionen des Reflektors gross sein gegenüber denjenigen der Lichtquelle. Das bedeutet aber - vor allem wenn zusätzlich eine hohe Lichtausbeute erwünscht ist - dass der Parallelstrahl einen grossen Querschnitt besitzt. Die Leuchtdichte des Lichtstrahls ist damit gering.

Gase, vor allem solche mit niedriger Atomzahl wie CO, $CO_2$, $CH_4$ usw. lassen sich mit optischspektroskopischen Methoden zuverlässig und selektiv nachweisen, da dieselben im infraroten Spektralbereich sehr spezifisch das Licht absorbieren.

Zwei grundsätzlich verschiedene Methoden können zur optisch - spektroskopischen Detektion von Gasen verwendet werden: einerseits die Extinktionsmethode, andererseits die photoakustische Methode.

Erstere beruht auf einer Bestimmung der Lichtabschwächung im Probegas. Bei einer solchen Messung ist es aber absolut notwendig, dass die Intensität des Lichtstrahles vor Eintritt in die Absorptionszelle sehr genau bekannt ist, da ja die Konzentrationsbestimmung aus der Differenz der Lichtintensität der für das Gas spezifischen Wellenlänge vor und nach der Licht-Absorptionsstrecke erfolgt. Üblicherweise wird deshalb ein Teil des Lichtes durch eine Hilfsoptik, z. B. einen halbdurchlässigen Spiegel, ausgekoppelt. Das erfordert aber zusätzlichen Material- und Adjustierungsaufwand.

Zur Gewährleistung eines langen Lichtweges und damit zur Erreichung einer grossen Abschwächung des Strahles, trotz beschränkter Abmessung der Messvorrichtung, werden für Extinktionsmessungen von Gasen oft Zellen eingesetzt, in denen das Licht mehrfach hin und her reflektiert wird, sog. Mehrfach-Reflexions-Zellen. Bei einer solchen Zelle ist es einerseits notwendig, dass der einfallende Lichtstrahl eng gebündelt ist - allenfalls kann der Divergenz des Strahles durch spezielle Spiegelform entgegengewirkt werden - andererseits muss das Spiegelsystem sehr genau adjustiert sein. Mehrfach-Reflexionszellen sind daher in der Regel recht aufwendig. Ein schwerwiegender weiterer Nachteil von Mehrfachtreflexionszellen ist die Alterung des optischen Systems, d. h. die Tatsache, dass sich das Lichtreflexionsvermögen im Laufe der Zeit ändert und sich die Geometrie desadjustieren kann. Solche Veränderungen führen zu Intensitätsabschwächungen, die, falls nicht des öfteren Eichmessungen durchgeführt werden, von der Probegasbedingten Signalabschwächung nicht unterschieden werden können.

Die zweite optisch-spektroskopische Gasdetektions-Methode eignet sich für den Nachweis niedrig konzentrierter atmosphärischer Gasverunreinigungen, wie etwa Kohlenmonoxid, Stickoxid oder Methan. Es handelt sich um die photoakustische Gasdetektionsmethode. Dieselbe besteht darin, dass die Druckänderungen, die in einer Gasmischung bei Absorption von monochromatischem Licht (vornehmlich Infrarotstrahlung) durch eine Gaskomponente entstehen, durch ein Mikrophon erfasst werden, wie das etwa im Artikel von L.G. Rosengren, Applied Optics, Vol. 14, Seite 1960 (1975), nachzulesen ist. Zu diesem Zweck werden meistens intensive, abstimmbare Infrarotlaser zusammen mit hochempfindlichen Kondensator-Mikrophonen eingesetzt. Die Tatsache, dass die Hauptbestandteile der Luft, nämlich Stickstoff, Sauerstoff und Argon - im Rahmen der Dipolnäherung - keine Infrarotstrahlung absorbieren, wirkt sich dabei günstig aus. Beispielsweise konnte L.B. Kreuzer wie es in J. Appl. Physics, Vol. 42, Seite 2934 (1971), beschrieben ist, Methan in Stickstoff, entsprechend einer Konzentration von 10 ppb ($10^{-8}$) mit Hilfe eines 16 mW-Lasers nachweisen. Es wird weiter die Vermutung geäussert, dass bei Verwendung intensiver Infrarot-Laserstrahlung Konzentrationen bis $10^{-13}$ gemessen werden können.

Unter wesentlich schwächeren Anforderungen an die Empfindlichkeit der Gasdetektion lässt sich das Nachweissystem stark vereinfachen. Insbesondere kann der kostspielige abstimmbare Infrarotlaser durch ein einfaches System, bestehend aus einem Glühkörper und einem Schmalband-Interferenzfilter, ersetzt werden. In neuerer Zeit ist von M.J.D. Low und G.A. Parodi in Infrared Physics, Vol. 20, Seite 333 (1980), zwar ein auf dem photoakustischen Effekt beruhendes Infrarot-Spektrometers beschrieben worden, bei dem statt des Lasers ein Glühstift verwendet worden ist. Diese Quelle hat sich allerdings wegen ihrer Intensitätsschwäche in Kombination mit einem Gitter-Monochromator für ein optoakustisches Infrarot-Spektrometer nicht gut bewährt.

Ein wesentlicher Vorteil der photoakustischen Methode besteht darin, dass die Lichtquellen-Intensität direkt als Proportionalitätsfaktor in die Grösse des photoakustischen Signales eingeht. Die Gaskonzentrationsmessung folgt also nicht aus einer Intensitäts-Differenzmessung wie bei der Extinktionsmethode.

Bei hohen Anforderungen an die Stabilität der Detektionsempfindlichkeit ist es aber angezeigt, die Lichtquellen-Intensität auch zu überwachen.

Zur Erreichung eines selektiven Gasnachweises mittels optischspektroskopischer Methoden ist monochromatische Lichtstrahlung unbedingt erforderlich. Bei Verwendung von Laser-Lichtquellen ist diese Bedingung zum vorneherein erfüllt (allenfalls müssen die ungewünschten Modes beseitigt werden). Wird hingegen eine breitbandige - beispielsweise thermische Lichtquelle eingesetzt, so ist der Einbau eines Prisma-, Gitter- oder Interferenzfilter-Monochromators unumgänglich.

Intensitätsmässig bringt der Ersatz des Gittermonochromators durch ein Interferenzfilter Vorteile - allerdings auf Kosten von Flexibilität und Genauigkeit.

Bei Verwendung von Interferenzfiltern sind die Anforderungen bezuglich der Divergenz des Lichtstrahls nicht allzu gross. Zur Vermeidung einer erwünschten Veränderung der Bandpasseigenschaften des Interferenzfilters soll der halbe Öffnungswinkel des Lichtbündels unterhalb 15 Winkelgraden liegen.

Um elektronische Drifterscheinungen auszuschalten, werden optische Spektrometer in der Regel mit intensitäts-modulierten Lichtquellen betrieben. Meistens wird die Modulation der Lichtintensität mechanisch mit Hilfe einer rotierenden Segmentscheibe vorgenommen. Solche Lichtunterbrecher sind allerdings relativ teuer und störungsanfällig.

Da preisgünstige Detektoren (beispielsweise pyroelektrische Elemente oder photoakustische Zellen) vielfach bei niedriger Frequenz optimal betrieben werden, kann oft unter Verzicht auf einen mechanischen Lichtunterbrecher die Lichtquelle direkt thermisch moduliert werden. Diese Lösung ist für ein einfacheres, zuverlässig arbeitendes Gas-Detektionssystem besonders günstig.

Eine korrekte Gaskonzentrationsbestimmung bedingt, dass die Zelle vor oder während der Messung gut gespült werden kann. Im Fall einer identischen Probegas- und Lichtdetektionszelle, wie das beim photoakustischen Verfahren zutrifft, ist die Messung während des Gasaustausches wegen der unvermeidlichen strömungsbedingten Druck- und Temperaturfluktuationen problematisch. Dieses Problem lässt sich allenfalls noch bewältigen, wenn bei hoher Modulationsfrequenz gearbeitet wird.

Hingegen ist im Falle einer thermisch und somit niedrigfrequenten Modulation ein alternierender Spül-Mess-Vorgang unumgänglich. Das bedeutet, dass Ventile notwendig sind, welche die Steuerung des Gasflusses erlauben. Bei photoakustischen Zellen sind allerdings die Ansprüche, welche an diese Ventile gestellt werden müssen niedrig, denn das photoakustische Drucksignal ist sehr klein. Es liegt im mPa-Bereich. Elektromagnetische Ventile, wie sie für pneumatische Zwecke eingesetzt werden, sind daher den gestellten Anforderungen bezüglich Preis, Dimensionen und Aufwand nicht optimal angepasst.

Über die WO-82/2950 hinausgehend ist aus DE-A-2 217 421 eine Vorrichtung zur Sammlung der Strahlung einer Lichtquelle die in Brennpunkt eines Rotationsellipsoids angeordnet ist, bekannt, bei der das Rotationsellipsoid durch einen zusätzlichen, in der Ebene der kurzen Hauptachse befindlichen Reflektor abgeschlossen ist. Die Öffnung befindet sich im Rotationsellipsoid am Durchstoßpunkt der langen Hauptachse, so daß das austretende quasiparallele Lichtbündel etwas divergiert.

Es ist Aufgabe der Erfindung, unter Vermeidung der beschriebenen Nachteile, eine Vorrichtung zur effizienten Sammlung der Strahlung einer Lichtquelle im Inneren eines konkaven Reflektors zu einem engen, quasiparallelen Bündel zu schaffen, das aus dem Innern des Reflektor als nicht divergierendes Bündel austritt, und das für optisch spektroskopische Zwecke, insbesondere für die Detektion von Gasen, geeignet ist.

Die Aufgabe wird gelöst durch Anordnung einer kleinen spotförmigen Lichtquelle in einem der beiden Brennpunkte eines geschlossenen Rotations-Ellipsoid-Reflektors und der Auskoppelung des gebildeten Strahlenbündels durch ein Loch in Richtung der verlängerten grossen Hauptachse des Ellipsoids. Die Abmessungen des Ellipsoid-Reflektors werden dabei dadurch reduziert, daß statt eines Vollellipsoids eine ellipsoidförmige Halbkalotte als Reflektor eingesetzt wird und als Rückstrahl-Reflektor ein planer Reflektor Anwendung findet. Durch einen lichtbrechenden Körper im Innern des Halbellipsoids kann verhindert werden, dass ein grösserer Teil der Strahlung nach Mehrfachreflexion direkt in die Lichtquelle zurückgeworfen wird.

Die Aufgabe kann ferner gelöst werden durch Anordnen einer draht-, wendel- oder bandförmigen Lichtquelle in der Umgebung der inneren Brennlinie eines elliptischen Halbzylinders, der durch einen planen Reflektor teilweise abgedeckt ist.

Statt mittels eines Rotations-Ellipsoids resp. eines elliptischen Zylinders mit entsprechendem planen Reflektor kann die Aufgabe auch mit Hilfe eines Rotations-Paraboloids, das teilweise durch einen planen Reflektor abgedeckt ist, oder eines teilweise durch einen planen Reflektor abgedeckten Zylinder mit parabolischer Grundfläche gelöst werden. Die Lichtquelle ist beim Brennpunkt des Paraboloids, resp. bei der Brennlinie des parabolischen Zylinders angebracht. Die Lichtauskopplung aus der optischen Vorrichtung erfolgt in jedem Fall durch eine Öffnung resp. einen transparenten Bereich im Zentrum des planen Reflektors.

Die messtechnisch notwendige Intensitätsmodulation kann entweder direkt durch Steuerung des Leuchtkörper-Stromes, oder mechanisch mit Hilfe einer rotierenden Sektorscheibe erzeugt werden. Als Monochromator wird beispielsweise ein optisches Schmalband-Bandpassfilter, vorzugsweise ein Interferenzfilter, verwendet. Mehrere optische Filter können allenfalls auf einer drehbaren Scheibe angeordnet werden, die beispielsweise gleichzeitig die Aufgabe des Lichtmodulators übernimmt.

Zur Lichtintensitätsmessung wird entweder ein nicht gasselektiv arbeitender Detektor, beispielsweise ein pyroelektrisches Element, oder eine photoakustische Messzelle, die allenfalls das Messgas enthält, verwendet.

Im letzteren Fall kann der Wirkungsgrad der Gasdetektion durch Anbringen eines Spiegels auf der Rückseite der photo-akustischen Zelle verbessert werden.

Wird die Gas -Messzelle bei niedriger Frequenz betrieben, so muss sie während der Messung von der Umwelt akustisch getrennt sein. Dies geschieht durch enge Kapillaren oder Sinterkörper in der Zellenwandung, durch einfache mechanische Ventile oder unter Verwendung eines nicht linearen, auf hydrodynamischen Prinzipien basierenden Durchflussystems, das in der Funktionsweise einem Schmitt-Trigger gleicht.

Zur forcierten Gasumwälzung dient eine Fördereinrichtung, die im wesentlichen auf einem Kleinlautsprecher basiert. Die Erfindung wird im folgenden anhand der bei liegenden Zeichnungen beschrieben. Es zeigen:

Fig. 1    Prinzip erklärende Skizze des Voll-Ellipsoid-Reflektors,

Fig. 2    mögliche Realisierung des Voll-Ellipsoid-Reflektors mit ebenem licht-brechendem Körper,

Fig. 3    Prinzip erklärende Skizze der Ellipsoid-Halbkalotte mit ebenem Spiegel gemäss Erfindung,

Fig. 4    und

Fig. 5    Realisierung der Lichtauskopplung aus der Ellipsoid-Halbkalotte,

Fig. 6    Ellipsoid-Halbkalotte mit rückseitig partiell verspiegeltem ebenen Reflektor,

Fig. 7    Prinzip erklärende Skizze des elliptischen Halbzylinders mit ebenen, den Strahl-Austrittsspalt bildenden, Reflektoren und Lichtquelle gemäss Erfindung,

Fig. 8    Prinzip erklärende Skizze des elliptischen Halbzylinders mit ebenen, den Strahl-Austrittsspalt bildenden, Reflektoren, seitlich angeordneten Abdeckungs-Spiegeln und Lichtquelle gemäss Erfindung.

Fig. 9    und

Fig. 10   Beispiele fur mögliche Aufhängungen der Lichtquelle,

Fig. 11   Prinzip erklärende Skizze des teilweise abgedeckten Rotations-Paraboloids gemäss Erfindung,

Fig. 12   Prinzip erklärende Skizze des teilweise abgedeckten Parabol-Zylinders gemäss Erfindung,

Fig. 13   Skizze des kombinierten elliptischparabolischen Zylinders,

Fig. 14   Anwendungen des Ellipsoid-Reflektors als Mehrfach-Reflexions-Gasmesszellen,

Fig. 15   Mögliches Anwendungsbeispiel der erfindungsgemässen Reflektorvorrichtung zur Beleuchtung des Eintrittspaltes einer optischen Vorrichtung, wie beispielsweise eines Monochromators.

Fig. 16   Anwendungsbeispiel für das teilweise abgedeckte Rotations-Paraboloid zur Detektion von Gasen mittels der optischen Extinktions-Methode.

Fig. 17   Verwendung des Ellipsoid-Reflektors zur photoakustischen Detektion von Gasen.

Fig. 18   Weiteres Anwendungsgebiet der erfindungsgemässen Reflektorvorrichtung zur Lichteinkopplung in eine photoakustische Zelle.

Fig. 19   Mögliche Ausführungsform eines kombinierten Monochromator-Lichtunterbrechers.

Fig. 20   Mögliche Realisierung einer Küvette zur kombinierten photoakustischen Messung der Gaskonzentration und der Lichtquellenintensität mittels einer mechanischen Vorrichtung.

Fig. 21   Weitere Möglichkeit zur kombinierten photoakustischen Gaskonzentrations-und Lichtquellenintensitäts-Messung mittels einer optischen Vorrichtung.

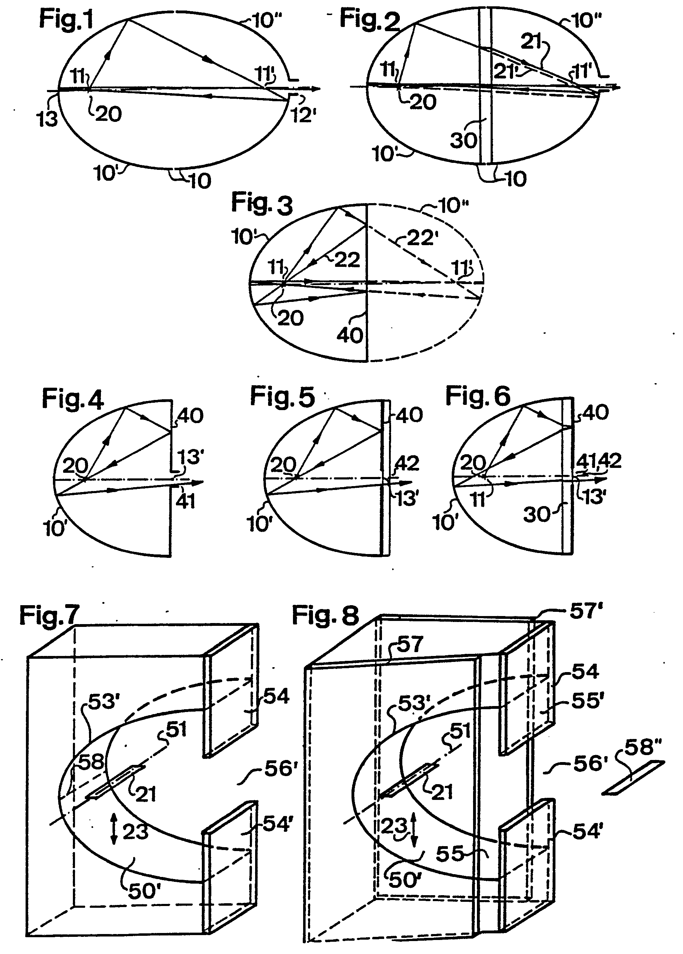

In der Darstellung von Fig. 1 ist der Voll-Ellipsoid-Reflektor skizziert, wie er in der deutschen Offenlegungsschrift DE-A-2 217 421 vom 25 Oktober 1973 durch W. Dost (zusätzlich zu dem Halb-Ellipsoid-Reflektor) und in dem eigenen Patentgesuch WO 82/2950 beschrieben ist. Den Gesetzen der geometrischen Optik zufolge geht ein vom Brennpunkt 11 eines Ellipsoids ausgehender Lichtstrahl, nach einer Reflexion an der Reflektorwandung in den Brennpunkt 11'. Umgekehrt wirkt das Ellipsoid auch als Rückstrahl-Reflektor, indem es den, den Brennpunkt 11' durchdringenden Strahl wieder in den Ursprung 11 zurückwirft. Das Licht wird demzufolge - eine vollständige Transparenz der Quelle vorausgesetzt - zwischen den beiden Brennpunkten 11, 11' hin und her reflektiert.

Verfolgt man einen solchen Lichtstrahl, so stellt man fest, dass er sich mit zunehmender Anzahl Reflexionen an der Ellipsoidfläche zusehens der grossen Ellipsoidhauptachse nähert. Eine in einem der beiden Brennpunkten angebrachte Lichtquelle 20 erzeugt daher in der grossen Hauptachse ein sehr intensives, im Idealfall paralleles Lichtbündel.

Durch eine kleine Öffnung in einem der Durchstosspunkte der grossen Hauptachse mit der Ellipsoidoberfläche (z. B. bei 12' in Fig. 1), ist es möglich, dieses Lichtbündel auszukoppeln. Die endliche Grösse der Öffnung 12' bewirkt allerdings, dass ein Strahl das Reflektorsystem 10 verlassen kann, bevor er in die grosse Hauptachse fällt.

Dieser Umstand ist für die Entstehung eines Lichtkegels, dessen Öffnungswinkel durch den Durchmesser dieser Öffnung einerseits und die Ellipsoidparameter andererseits determiniert wird, verantwortlich.

Wesentlich ist, dass der hintere, der Öffnung 12' gegenüberliegende, Bereich 13 der Reflektorfläche 10' ein gutes Reflexionsvermögen aufweist und nicht durch die Lichtquellen-Aufhängung verdeckt ist.

Bei der in Fig. 1 dargestellten Lichtsammelvorrichtung kann eingewendet werden, dass sie im Idealfall einer genau punktförmigen, optimal emittierenden Lichtquelle, die genau im einen Brennpunkt eines fehlerfreien Ellipsoids angebracht ist, überhaupt nicht funktionieren kann. Alles Licht, das die Quelle emittiert, wird nach zwei Reflektionen an der Ellipsoidfläche wieder auf den Emitter zurückgeworfen und dort absorbiert. W. Dost war sich, laut der erwähnten Offenlegungsschrift, dessen durchaus bewusst. Aus diesem Grunde verlangte er, dass in den Brennpunkten keine Materie vorhanden sein darf.

Wie sich allerdings gezeigt hat, besitzt die Vorrichtung mit wendelförmigen Lichtquelle von beachtlicher Transparenz und gegenüber der Grösse des Ellipsoids kleinen Dimensionen günstige Lichtsammlungseigenschaften. Das auf den Wendel zurückgeworfene Licht geht ohnehin nicht verloren, es bewirkt eine zusätzliche Aufheizung des Glühkörpers. Immerhin bewirkt die nicht vollständige Transparenz der Lichtquelle eine Reduktion der Lichtausbeute. So wurde für eine 3 mm lange Wendel, deren Strahlung durch eine 1-cm-Öffnung eines Rotations-Ellipsoids mit Hauptachsenlängen von 14.4 und 12 cm ausgekoppelt wurde, eine Ausbeute von 30 % gefunden, während auf Grund einer Computer-Simulation für eine transparente Quelle mehr als 50 % erwartet wurde.

Eine leichte Verbesserung der Ausbeute kann, wie eine Computer-Simulation für eine teilweise absorbierende Quelle zeigte, dadurch erzielt werden, dass der Lichtstrahl 21 durch einen lichtbrechenden Körper 30 schwach abgelenkt wird, sodass er nach zwei Reflexionen nicht mehr auf die Quelle selbst zurückfällt. Der lichtbrechende Körper kann beispielsweise aus einer Planscheibe 30 bestehen, die, wie das in der Darstellung von Fig. 2 zu sehen ist, in der Mitte zwischen den beiden Brennpukten 11, 11' angebracht ist. Der ursprüngliche, nicht abgelenkte Strahl 21', wie er ohne Anbringen des lichtbrechenden Körpers 30 vorhanden wäre, ist durch eine unterbrochene Linie markiert, während der durch 30 gebrochene Strahl 21 durch eine durchgehende Linie charakterisiert wird.

In Fig. 3 ist die, die geometrischen Abmessungen reduzierenden ellipsoidförmige Halbkalotte 10' mit dem planen Reflektor 40 dargestellt. Das Funktionsprinzip dieser Anordnung ist genau dasselbe wie beim in Fig. 1 dargestellten Vollellipsoid-Reflektor. Zur Veranschaulichung wurde die fehlende Ellipsoidhälfte 10'' durch eine unterbrochene Linie eingezeichnet. Die ebene Spiegelfläche fällt mit der Mittelnormalebene der beiden Brennpunkte 11 und 11' zusammen. Demzufolge ist der Strahlenverlauf und somit auch der Dichtsammeleffekt längs der grossen Hauptachse genau derselbe wie im Vollellipsoid. Dies ist anhand des eingezeichneten Strahles 22 und seiner virtuellen, mit unterbrochenen Linie eingezeichneten Ergänzung 22' sofort ersichtlich.

Nachteilig bei der Halbkalotte von Fig. 3 gegenüber dem Vollellipsoid von Fig. 1 ist der Umstand, dass stets der, die Lichtquelle enthaltende Brennpunkt 11 durchdrungen werden muss, was wegen der nicht vollständigen Transparenz derselben zu einer Lichtabschwächung führt. Des weiteren tritt eine zusätzliche Reflexion, nämlich diejenige am planen Reflektor 40, auf. Diese beiden Nachteile werden jedoch teilweise dadurch wettgemacht, dass ein grosser Teil der Strahlen mit einer Reflexion weniger an der Ellipsoid-Mantelfläche auskommt, um unter einem bestimmten Winkelkonus ausgekoppelt werden zu können. Je nach Ellipsoidparametern erhält man deshalb sogar eine grössere Lichtausbeute als beim Vollellipsoid. Die gesammelte Strahlung kann in Analogie zur Öffnung 12' nach Fig. 1 durch eine Öffnung in der Ellipsoid-Mantelfläche ausgekoppelt werden, die das bereits in der erwähnten deutschen Offenlegungsschrift von W. Dost beschrieben ist. Der entnommene Strahl ist in diesem Falle divergent.

Gegenstand dieser Erfindung ist die Auskopplung des Strahls durch eine Öffnung 41 im Zentrum des planen Reflektors 40 nach der Darstellung von Fig. 4.

Wie Fig. 5 zeigt, kann das Lichtbündel, statt durch die Öffnung 41, auch durch einen nichtreflektierenden Zentralbereich 42 im planen Reflektor 40 entnommen werden.

Die Lichtauskopplung durch die Öffnung 41, resp. den transparenten Bereich 42 des planen Reflektors 40, wie in Fig. 4 und Fig. 5 abgebildet, bringt gegenüber derjenigen durch die Öffnung 12' in der Ellipsoid-Mantelfläche (Fig. 1) einen grossen Vorteil. Der entnommene Lichtstrahl ist nicht divergent, sondern er konvergiert im ausserhalb der Ellipsoid-Halbkalotte 10' liegenden Fokalpunkt 11', wie er in Fig. 3 abgebildet ist.

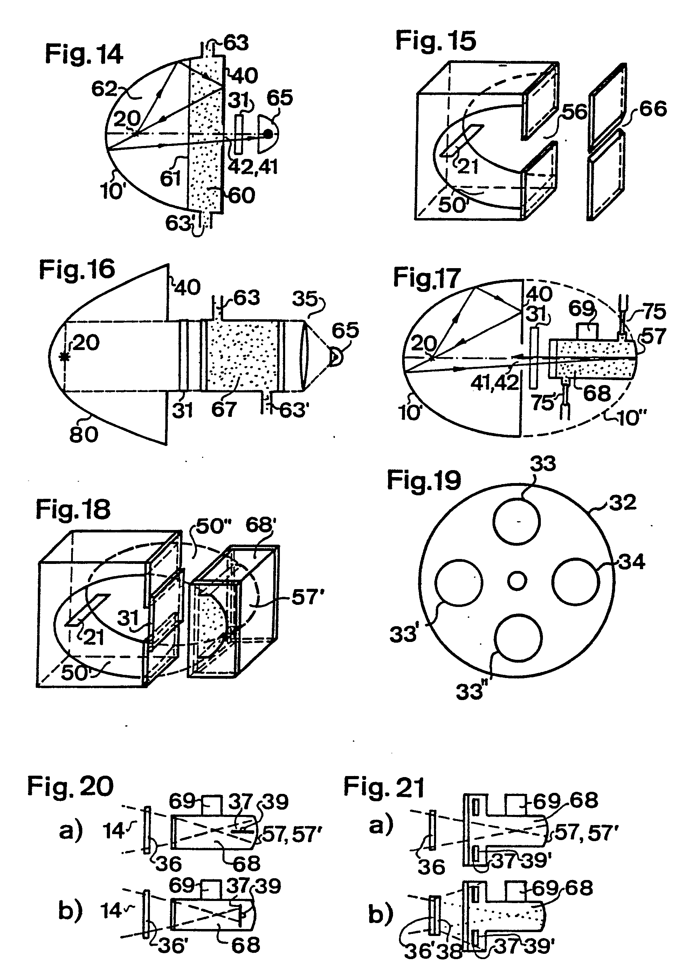

Damit kann dieser Fokalpunkt 11' beispielsweise in die zu bestrahlende Vorrichtung verlegt werden. Entsprechende Skizzen sind in Fig. 14, Fig. 16, und Fig. 17 dargestellt. Es ist somit möglich, im bestrahlten Objekt eine hohe Lichtintensität zu erzielen.

Eine Kombination der Stahlablenkung durch einen lichtbrechenden Körper 30 nach Fig. 2 (zwecks Verhinderung der Lichtabsorption durch die Quelle) mit dem planen Reflektor 40 nach Fig. 3 ist in Fig. 6 dargestellt. Der plane Reflektor 40 ist auf der Aussenfläche des lichtbrechenden Körpers 30 angebracht. Damit können die Bedingungen der Lichtbrechung und der Reflektion gleichzeitig erfüllt werden. Die Lichtauskopplung kann wieder durch eine Öffnung 41 resp. einen nicht-reflektierenden Zentralbereich 42 des planen Reflektors 40 vorgenommen werden, wie das in Fig. 6 abgebildet ist.

Die Vorrichtung, welche aus einer rotationssymmetrischen Halbellipsoidkalotte 10' und einem planen Reflektor 40 mit Lichtauskopplung im Zentralbereich 41, 42 besteht (vergleiche Fig. 4 und Fig. 5), besitzt eine sehr grosse Lichtausbeute. So konnte in Übereinstimmung mit Computersimulationen experimentell bestätigt werden, dass sich für eine 0,7 mm lange Glühwendel mit 0,75 mm Durchmesser, die sich beim Brennpunkt 11 eines rotationssymmetrischen Halbellipsoid-Reflektors 10', 40 befindet, eine Lichtausbeute von ca. 60 % ergibt. Die Längen der grossen Achsen betrugen: A = B/2 = 40 mm und der Durchmesser des Lichtdurchlassbereiches im Planspiegel 40 war D = 20 mm. Den Berechnungen wurden die folgenden experimentell ermittelten Werte zugrunde gelegt:

Reflexionsvermögen der Kalottenfläche: 71 %, Reflexionsvermögen des Planspiegels 95 % und Transmission der Wendel: 65 %.

Voraussetzung für die Erzielung einer solch hohen Lichtausbeute sind allerdings die kleinen Dimensionen der Quelle gegenüber dem Reflektor. Da die maximale elektrische Belastbarkeit und somit die erreichbare Lichtemission - abgesehen von Materialkonstanten - durch die Glühkörperoberfläche gegeben ist, ist die effektive Lichtleistung gering.

Es stellt sich die Frage, inwiefern ein zylindrischer Reflektor, wie er in Fig. 7 abgebildet ist, gegenüber einem rotationssymmetrischen Reflektor Vorteile bringen kann. Der Verzicht auf die Rotationssymmetrie bedeutet eine Reduktion der Lichtausbeute, die sich zwar noch verbessern lässt, indem der elliptische Zylinder beidseitig mit planen Seitenreflektoren 57, 57' abgedeckt wird, wie das in Fig. 8 dargestellt ist. Der hohe Wirkungsgrad der rotationssymmetrischen Reflektorvorrichtung lässt sich aber nicht erreichen.

Messungen, aber auch Computersimulationen haben gezeigt, dass beim rotationssymmetrischen Reflektor die Lichtquelle sehr genau auf der Rotationsachse 14 von Fig. 1 liegen muss, ansonst ein starker Abfall der Ausbeute stattfindet. Hingegen ist die Abhängigkeit der Ausbeute von der Quellenpositions für ein Verschiebung der Quelle auf der Achse selbst weniger ausgeprägt. Das bedeutet aber, dass vor allem der Durchmesser der Wendel klein gehalten und sehr genau in der Rotationsachse adjustiert werden muss. Beim vorgeschlagenen ellipsenförmigen Zylinder 50' kann ohne wesentliche Reduktion des Wirkungsgrades die Lichtquelle als rechteckiges Band 21 ausgebildet werden, wie das in Fig. 7 beispielsweise dargestellt ist. Damit ist es möglich, der Lichtquelle eine grosse Ausdehnung zu verschaffen, was die Erreichbarkeit einer erhöhten Lichtintensität bedeutet.

Ein weiterer Vorteil der vorgeschlagenen Reflexionsvorrichtung ist, dass die Lichtquelle nur in einer einzigen Dimension genau adjustiert werden muss, nämlich in Richtung parallel zur kleinen Ellipsen-Hauptachse, wie das in Fig. 7 mit dem Pfeil 23 dargestellt ist.

In Analogie zum Rotations-Halbellipsoid von Fig. 3 wird nur die eine Hälfte des elliptischen Zylinders verwendet. In Fig. 7 ist diese Vorrichtung dargestellt Zusammenfallend mit der Normalebene der Brennpunkte der, den Normalzylinder 50' bildenden, Ellipse 53', sind zwei plane Reflektoren 54 und 54' angeordnet. Dieselben besitzen analoge Funktion wie der plane Reflektor 40 beim rotationssymetrischen Halbellipsoid-Reflektor 10' von Fig. 3, nämlich die Rückreflektion des Strahls in die, die Lichtquelle 21 enthaltende Brennlinie 51. Die beiden Planspiegel 54 und 54' sind derart positioniert, dass ein, die Lichtauskopplung gewährleistender Spalt 56' in der freigehalten wird. Zu diesem Zweck muss sich der Spalt 56' in der Umgebung der Symmetrieebene, die aus der grossen Hauptachse der Ellipse 53' und der Zylinderachse gebildet wird, befinden.

Die beiden ebenen Rückstrahl-Reflektoren 54 und 54' lassen sich auch durch einen einzigen Planspiegel ersetzen, der in die Mitte einen, dem Spalt 56' entsprechenden, transparenten Bereich aufweist.

Die beiden seitlich angebrachten Planspiegel 57 und 57', wie sie in Fig. 8 abgebildet sind, dienen zur Erhöhung der Lichtausbeute, indem sie seitlich entweichende Strahlung in den Reflektor zurückwerfen. Optisch entsprechen sie einer Verlängerung des Zylinders ins Unendliche. Die Planspiegel 57, 57' können entweder parallel angeordnet, oder aber gegeneinander geneigt sein, wie das in Fig. 8 dargestellt ist. Es ist festzuhalten, dass die seitlichen Planspiegel bewirken, dass auch Licht unter einem allenfalls grossen Divergenzwinkel in den Fokalbereich 58'' gelangen kann. Diese Feststellung dürfte bei Verwendung von optischen Filterelementen, die den Interferenzeffekt ausnützen, von Bedeutung sein, da Veränderungen der Bandpass-Charakteristik auftreten können. Diesem Umstand kann, zwar unter Reduktion der Lichtausbeute, abgeholfen werden, indem die beiden Planspiegel 57, 57' nicht ganz nach vorne gegen die planen Reflektoren 54, 54' reichen, sodass Licht, das unter einem grossen Ausfallwinkel durch die Öffnung 56' ausgekoppelt würde, die Optik durch den Spalt 55, oder 55' vorzeitig verlässt (siehe Fig. 8).

Der Wert des elliptischen Zylinderreflektors nach Darstellung von Fig. 8 wurde anhand einer Computer-Simulation überprüft. Unter der Annahme einer streifenförmigen Lichtquelle der Dimensionen 8 mm x 4 mm x 0.5 mm ergab ein rotationssymmetrischer Halbellipsoidreflektor nach Fig. 4 mit den Dimensionen A/2 = 24 mm, B = 40 mm und einem Lochdurchmesser im Planspiegel von 20 mm eine Lichtausbeute von 40 %. Der elliptische Zylinder nach Fig. 8 lieferte für dieselbe Lichtquelle und dieselben Ellipsenparameter, einer Spaltbreite von 20 mm und einer Zylinderhöhe von 30 mm eine Lichtausbeute von annähernd 60 %.

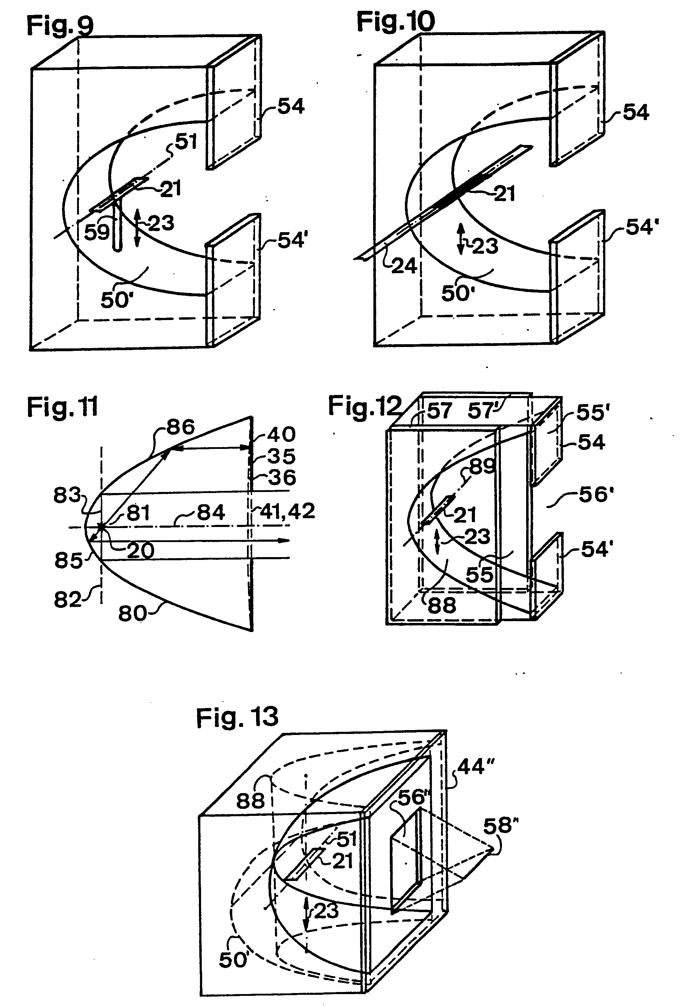

Fig. 9 und 10 zeigen Beispiele von möglichen Aufhängungen der Lichtquelle 21. Günstig ist beispielsweise eine seitliche Aufhängung der Quelle, wie sie in Fig. 9 dargestellt ist. Die seitliche Stütze 59 führt zu kleineren Ausbeuteverlusten als das bei einer Aufhängung

im hinteren Teil des elliptischen Zylinders, also im Lichtkollimationsgebiet, der Fall wäre. Zudem kann die Lichtausbeute mittels der Stütze 59 durch eine Verschiebung in Längsrichtung 23 in der einzigen kritischen Dimension verändert und damit die Lichtquelle beispielsweise adjustiert werden. In der Darstellung von Fig. 10 ist die bandförmige Lichtquelle 21 seitlich herausgeführt. (24) Bei dieser Aufhängung ist darauf zu achten, dass eine gute Adjustierung in der in Fig. 10 dargestellten Richtung 23 gewährleistet werden kann.

Oft ist es zwar wünschenswert, die Lichtstrahlung direkt effizient auf einen kleinen Fleck, beispielsweise auf den lichtempfindlichen Bereich eines Detektors zu fokussieren. Andererseits ist man gelegentlich bestrebt, vorerst die Strahlung zu einem engen Parallelstrahl zu sammeln. Auf Grund der Gesetze der geometrischen Optik lässt sich, ausgehend von einer punktförmigen Lichtquelle, ein Parallel-Strahlenbündel schaffen, wenn die Quelle im Brennpunkt eines Parabol-Reflektors angebracht wird. Allerdings kann man mit solchen Vorrichtungen keine hohe Strahlungsdichte erreichen. Eine Verbesserung lässt sich durch den modifizierten Parabolreflektor 80, 40, wie er beispielsweise in Fig. 11 abgebildet ist, erzielen. In Analogie zu den optischen Vorrichtungen von Fig. 1 bis Fig. 10 beruht die Steigerung der Lichtsammlung auf der Verwendung eines planen Reflektors 40, der einen Teil der emittierten Strahlung wieder in die Quelle zurückwirft. Wesentlich für das Funktionieren dieser Vorrichtung ist wiederum die teilweise Transparenz der Quelle.

Der Rotations-Parabolspiegel 80 von Fig. 11, ist beispielsweise mit dem planen Reflektor 40 abgedeckt, in dessen Zentrum eine kreisscheibenförmige Öffnung 41 oder ein entsprechender lichttransparenter Bereich 42 vorhanden ist. Die Grösse dieser Kreisscheibe 41, 42 stimmt mit der Scheibe 83 überein, die aus einer im Brennpunkt 81 angeordneten Orthogonalebene 82 zur Rotationsachse 84 durch das Rotations-Paraboloid 80 herausgeschnitten wird.

Das Licht, das ausgehend von der Quelle 20, in den, bezüglich der Normalebene 82, hinteren Teil 85 des Paraboloids 80 fällt, wird parallel zur Rotationsachse 84 durch die Öffnung 41, 42 aus dem Reflektorsystem 80, 40 ausgekoppelt. Derjenige Anteil der Strahlung, der in den vorderen Teil 86 des Paraboloid-Reflektors 80 fällt, gelangt vorerst auf den planen Reflektor 40, wird von dort auf dem gleichen Lichtweg nach einer Reflexion an der Paraboloidfläche in die Quelle 20 zurückgeworfen, durchdringt dieselbe teilweise und gelangt schliesslich in den hinteren Teil 85 des Paraboloidreflektors. Von dort aus wird das Licht als Parallelstrahl zur Rotationsachse 84 durch die Öffnung 41, 42 ausgekoppelt.

Beim gedeckten Halbellipsoid-Reflektor, wie er in Fig. 3 dargestellt ist, wird das Licht, das von der Quelle 20 ausgehend vorerst auf den planen Reflektor 40 fällt, ebenso gesammelt wie derjenige Anteil, der vorerst auf die Ellipsoidfläche 10' gelangt. Das hängt damit zusammen, dass die elliptische Optik durch den planen Reflektor 40 virtuell ergänzt wird. Dieser Umstand führt dazu, dass mit Hilfe des gedeckten Halbellipsoid-Reflektors eine sehr hohe Effizienz der Lichtsammlung erreicht werden kann. Ein solch gutes Resultat lässt sich mit dem gedeckten Paraboloid-Reflektor, wie er in Fig. 11 gezeigt ist, nicht erreichen. Das Licht, das ausgehend von der Quelle 20, direkt auf den Planspiegel 40 fällt, wird nicht mehr in den Brennpunkt zurückgeworfen und kann damit keinen Anteil zum Parallelstrahl liefern. Dieser Strahlungsanteil muss daher als Unkontrollierter Verlust angesehen werden. Dieser Nachteil ist sofort einleuchtend, denn die Aneinanderfügung von zwei Paraboloiden, wie das durch die virtuelle Ergänzung des Reflektors 80 durch den planen Reflektor 40 gegeben ist, ist für Strahlen, die vom einen Brennpunkt 81 auf die andere Paraboloid-Reflektorhälte fallen, wenig sinnvoll.

Es wurde angenommen, dass der äussere Durchmesser D des Planspiegel 40 doppelt so gross ist, als derjenige Durchmesser der Scheibe, die durch die, den Brennpunkt 81 enthaltende Normalebene 82 aus dem Paraboloid herausgeschnitten wird. Des weiteren wurde vorausgesetzt, dass das Reflexionsvermögen des Paraboloid-Reflektors 80 69 % und dasjenige des planen Reflektors 40 95 % beträgt, sowie dass die Lichtquelle 20 eine Transparenz von 65 % aufweist. Unter diesen Voraussetzungen ist immerhin gegenüber dem nicht abgedeckten Reflektor eine Erhöhung der Strahlungsdichte im Parallelstrahl von 30 % zu erwarten.

Eine leichte Erhöhung der Effizienz der Optik, kann dadurch erzielt werden, dass, in Analogie zur Anordnung von Fig. 2 und Fig. 6, ein lichtbrechender Körper im Innern der Reflektor-Vorrichtung angebracht wird, der den Lichtstrahl leicht ablenkt. Der Strahl fällt nun nicht genau in die Lichtquelle 20 zurück wo er teilweise absobiert würde, sondern er läuft knapp an ihr vorbei. Die Ablenkung kann nicht wie beim Ellipsoid-Reflektor 10 mittels einer planparallelen Platte 30 erreicht werden, da die, in den Lichtquellenbereich zurückgeworfene, Strahlen stets senkrecht auf den planen Reflektor 40 auftreffen. Die erwünschte Ablenkung kann aber durch einen Körper 35 mit der gekrummten Fläche 36, wie sie in Fig. 11 mit unterbrochener Linie eingezeichnet ist, erzielt werden. Als Alternativlösung mit ähnlicher Wirkung kann als planen Reflektor 40 ein leicht gekrümmter Spiegel gewählt werden.

Die Darstellung von Fig. 12 zeigt ein Analogon zum gedeckten elliptischen Zylinder von Fig. 8. Der Reflektor 88 ist als parabolischer Zylinder ausgebildet. Abgedeckt ist derselbe entweder durch zwei, den planen Reflektor bildende Planspiegel 54, 54' oder durch einen einzigen Planspiegel mit einer Öffnung resp. einer

transparenten Aussparung im Zentralbereich 56'.

Die beiden seitlich angebrachten Spiegelflächen 57 und 57', die als Planspiegel entweder parallel oder schief zueinander stehen oder aber eine Krümmung aufweisen, dienen zur Erhöhung der Effizienz der Optik, indem sie seitlich entweichende Strahlung in den Reflektor zurückwerfen. Werden als seitliche Reflektoren 57, 57' Planspiegel verwendet, so liegt der, durch die Öffnung 56' austretende Lichtstrahl wohl in einer Parallelebene zur Ebene, die aus der Parabel- und der Zylinderachse gebildet wird, nicht aber in einer Orthogonalebene zur Zylinderachse

Will man verhindern, dass die Strahlung nicht unter allzu schiefem Winkel austreten kann, so sind die seitlichen Reflektoren 57, 57' nicht bis nach vorne zu den planen Reflektoren 54, 54' zu ziehen. Strahlen, die unter stark schiefem Winkel durch die Öffnung 56' austreten würden, können durch die seitlichen Schlitze 55, 55' vorzeitig entweichen.

Der parabolische Zylinder von Fig. 12 hat eine niedrigere Effizienz als das gedeckte Rotationsparaboloid von Fig. 11. Der Vorteil des parabolischen Zylinders liegt im Umstand, dass die Lichtquelle 21 draht-, wendel- oder bandförmig parallel zur Brennlinie 89 ausgebildet und angeordnet werden kann. Sie darf somit eine grössere Fläche aufweisen als die Quelle beim rotationssymetrischen Analogon von Fig. 11.

Die einzige kritische Adjustierrichtung der Lichtquelle 21 ist durch den Pfeil 23 in Fig. 12 dargestellt. Sie verläuft orthogonal zur Parabel und zur Zylinderachse.

Im Zusammenhang mit den Aufhängungen der Lichtquelle 21 sei auf die Darstellung in Fig. 9 und Fig. 10 hingewiesen, die in gleicher Weise wie für den elliptischen Zylinder auch für den parabolischen Zylinder ihre Gültigkeit haben.

Bei der Beschreibung der Fig. 8 und Fig. 12 wurde angenommen, dass die Seiten-Reflektoren 57, 57' plan sind. An sich ist es auch denkbar, dass gute Reflektoren verwendet werden.

Sehr sinnvoll ist beispielsweise eine Anordnung, bei der der Zylinder von elliptischer Form 50' ist, wie er in Fig. 7 abgebildet ist, während die beiden Seiten-Reflektoren 57, 57' einen parabolischen Zylinder 88 approximieren. In Fig. 12 ist diese Vorrichtung dargestellt. Auf diese Weise kann erreicht werden, dass das Licht zu einer seitlich weitgehend begrenzten Brennlinie 58'' gesammelt wird. Die elliptische Form ist für die Fokussierung zu einer Brennlinie verantwortlich und die parabolische Zylinderform der Seiten-Reflektoren 57, 57' für die Parallelität der Strahlung zur Orthogonalebene der Brennlinie 51 des elliptischen Zylinders. Als planer Reflektor 44'' wird vorteilhafterweise ein Spiegel mit einer rechteckigen zentralen Öffnung 56'' oder einem entsprechenden transparenten Bereich verwendet, wie das in Fig. 3 dargestellt ist.

Allenfalls kann der Übergang vom elliptischen zum orthogonal dazu stehenden parabolischen Zylinder kontinuierlich gewählt werden.

Im folgenden wird auf die Anwendung der besprochenen Vorrichtungen von Fig. 3 - Fig. 13 für optisch-spektrokopische Zwecke eingegangen. Das Schwergewicht wird auf die optische Detektion von Gasen gelegt, obwohl natürlich auch die Untersuchung von Flüssigkeiten und Festkörpern, sowie deren Grenzflächen angezeigt ist.

In Fig. 14 ist eine mögliche Anwendung des Ellipsoid Reflektors von Fig. 3 zur Detektion von Gasen dargestellt. Die Reflektionsvorrichtung kann als Kombination von Lichtkollektoren und Mehrfach-Reflexions-Gasabsorptionsküvetten konzipiert.

In der Darstellung von Fig. 14 befindet sich das Messgas beispielsweise in einem Zwischenbereich 60, der durch die Trennwände 40 und 61 vom Lichtquellenraum 62 abgetrennt ist. Der Gasaustausch findet durch die Öffnung 63 und 63' statt. Die Trennwand 61 ist für Strahlung der Wellenlänge, die für die Gasdetektion wichtig ist, transparent, während die plane Trennwand 40 verspiegelt ist und im Zentrum entweder mit einer Öffnung 41 oder einem transparenten Bereich 42 versehen ist. Die Trennwand 61 kann allenfalls weggelassen werden, wobei allerdings gasströmungs-bedingte Intensitätsfluktuationen der Lichtquelle in Kauf genommen werden müssen.

Das durch den transparenten Bereich 41, 42 von 40 austretende Licht wird beispielsweise nach Passieren eines Bandpassfilters 31 einem Strahlungsdetektor 65 zugeführt. Die Filter-Detektor-Vorrichtung 31, 65 lässt sich allenfalls auch durch eine, mit der zu detektierenden Gasart gefüllte photoakustische Zelle 68 ersetzen.

Die messtechnisch notwendige Intensitätsmodulation der Lichtquelle kann entweder direkt durch Steuerung des Betriebsstromes des Leuchtkörpers vorgenommen werden oder mechanisch durch eine rotierende oder vibrierende Blende, die zwischen Quelle 20 und Detektorzelle 65 angeordnet ist.

Fig. 15 zeigt den Einsatz des elliptischen Zylinders zur Beleuchtung des Lichteintrittsspaltes 66 eines optischen Gerätes, beispielsweise eines Prisma- oder Gitter-Monochromators. Der Übersichtlichkeit halber sind die allfälligen seitlichen Planspiegel 57, 57', wie sie in Fig. 8 eingezeichnet sind, weggelassen. Der Reflektor wird derart angeordnet, dass die Spaltfläche mit dem Fokalbereich des Reflektors, wie er in Fig. 8 durch 58'' dargestellt ist, zusammenfällt.

Die Darstellung von Fig. 16 betrifft ein Beispiel einer Anwendung des gedeckten Paraboloid-Reflektors, wie er in Fig. 11 zu sehen ist. Der aus der Reflektorvorrichtung 80, 40 austretende parallele Lichtstrahl wird einer Gasküvette 67 zugeführt, wo ein Teil des Lichtes absorbiert wird. Der Parallelstrahl wird anschliessend mittels der Fokussiervorrichtung 35 auf die lichtempfindliche Fläche des Lichtdetektors 65 fokussiert. Die absorptionsbedingte Abschwächung der Lichtintensität ist ein Mass für die Gaskonzentration in der Gasküvette 67. Mit 31 ist das Monochromator-Element bezeichnet.

Fig. 17 zeigt ein Beispiel einer Anwendung des gedeckten Halbellipsoidreflektors 10', 40 von Fig 4 zur photoakustischen Detektion von Gasen. Der durch die Öffnung 42 austretende Lichtstrahl wird einer mit Gas gefüllten photoakustischen Zelle 68 zugeführt. Der gebündelte Lichtstrahl, der durch die Öffnung 42 in der ebenen Spiegelfläche austritt, fällt zunächst auf ein optisches Bandpassfilter 31 und gelangt anschliessend in die photoakustische Zelle 68. Falls der Lichtstrahl intensitäts-moduliert ist, was beispielsweise durch alternierendes Ein- und Ausschalten der Lichtquelle 20 möglich ist, so bewirkt die vom Gas in der Zelle 68 absorbierte Strahlung periodische Druckschwankungen, die mit dem Mikrophon 69 detektiert werden. Zur Verlängerung des Lichtweges ist es sinnvoll, an der Rückwand der photoakustischen Zelle 68 einen ebenen oder gekrümmten Lichtreflektor anzubringen. Besonders günstig ist ein Hohlspiegel 57, wie er in Fig. 17 abgebildet ist, welches der Form der substituierten Ellipsoidhälfte 10'' angepasst ist. Damit kann erreicht werden, dass der nichtabsorbierte Anteil der in der Zelle 68 fallenden Strahlung ohne Veränderung des Strahlenganges in den Ellipsoidreflektor 10', 40 zurückgeworfen wird. Die Folge ist eine Erhöhung des optischen Wirkungsgrades der Lichtsammel-Vorrichtung.

Fig. 18 zeigt in Analogie zur Darstellung von Fig. 1 als Anwendungsbeispiel des elliptischen Zylinders eine photoakustische Messapparatur. Die photoakustische Messzelle 68' ist zylinderförmig ausgebildet, was eine gute Ausnützung des Lichtes bedeutet. Die Form des Rückspiegels 57' kann ebenfalls derart ausgelegt werden, dass er die elliptische Zylinderform 50'' des Hauptreflektors 50' ergänzt. Dies führt dazu, dass Licht, das in der Zelle nicht absorbiert worden ist, nach einer Reflexion im Hauptreflektor 50' wieder in die photoakustische Zelle 68' gelangen kann.

Die selektive Gasdetektion mit optischspektroskopischer Methode bedingt die Verwendung von monochromatischem Licht. Falls als Lichtquelle ein Glühkörper eingesetzt wird, der naturgemäss in einem breiten Spektralbereich Licht emittiert, ist ein Monochromator erforderlich. Für unsere Zwecke am besten geeignet ist ein Schmalband Interferenzfilter 31. Daneben ist es aber auch denkbar, eine mit einem geeigneten Gas gefüllte verschlossene Küvette zu verwenden, die, bedingt durch die spezifischen Absorptions-Banden des Gases (vornehmlich im Infrarot-Spektralbereich) in gewissen Spektralbereichen nicht transparent ist.

In Fig. 19 ist die Kombination eines mechanischen Lichtmodulators mit einem Monochromator dargestellt. Eine solche Kombination ist besonders sinnvoll, da aus messtechnischen Gründen die Lichtintensität sowieso moduliert werden muss. Auf der rotierenden Scheibe 32 ist mindestens ein Interferenzfilter 33 oder mindestens eine Gasküvette 34 angeordnet. Werden verschiedene Interferenzfilter 33, 33', 33'' usw. verwendet bzw. Küvetten 34, 34', 34'' usw. mit verschiedenen Gasfüllungen, oder Kombinationen von Interferenzfiltern und Gasküvetten, so wird ermöglicht, gleichzeitig mehrere Komponenten einer Gasmischung getrennt zu erfassen (darauf wird später näher eingegangen).

Statt kreisrunde Interferenzfilter bzw. Gasküvetten zu verwenden, wie das in der Darstellung in Fig. 19' angegeben wurde, ist es denkbar, dass sektorförmig ausgebildete und zusammengefügt angeordnete Filterelemente zum Einsatz gelangen.

Wie bereits erwähnt, hat das photoakustische Gasmessverfahren gegenüber der Extinktionsmethode den Vorteil, dass die Gaskonzentrationsbestimmung nicht aus der Differenzmessung zweier Intensitäten folgt, sondern direkt aus der Lichtleistung, welche in der Gasküvette absorbiert worden ist. Die Intensität $I_0$ der Lichtquelle geht somit lediglich als Proportionalitätskonstante in die Gaskonzentrations-Messung ein.

In vielen Fällen ist die natürliche Stabilität der Lichtquelle hinreichend für die Genauigkeit der Messung. Gelegentlich ist es aber vorteilhaft, wenn ständig die Lichtintensität $I_0$ überwacht wird. Diese $I_0$-Messung kann beispielsweise durch Auskopplung eines, der Lichtabsorption im Probegas nicht unterworfenen, Teilstrahles bewerkstelligt werden. Dieser Teilstrahl wird einem Referenzdetektor zugeführt. Es ist ein Nachteil dieser Anordnung, dass Mess- und Referenzsignale von verschiedenen Detektoren erfasst werden, die allenfalls verschiedene Temperatur- und Druckabhängigkeiten und abweichende Alterungs-Eigenschaften besitzen. Daher ist es wünschenswert, wenn sowohl das Mess- als auch das Referenzsignal mit demselben Detektor erfasst werden können. Eine solche Anordnung brächte zugleich den Vorteil einer zuverlässigen Selbstüberwachung der Vorrichtung.

In Fig. 20 und Fig. 21 sind Vorrichtungen dargestellt, die eine kombinierte Messung der Gaskonzentration und der Lichtquellen-Intensität $I_0$ erlauben. Bei der Vorrichtung, wie sie in Fig. 20 dargestellt ist, wird die kombinierte Messung durch eine mechanische Manipulation in der photoakustischen Zelle erreicht, während beider Vorrichtung von Fig. 21 die Umstellung des Messvorganges in der Zelle rein optischer Natur ist. In beiden Fällen beruht die Gaskonzentrationsmessung auf dem photoakustischen Effekt in Gasen, der bereits eingehend besprochen worden ist. Für die Lichtquellen-Intensitätsmessungen wird hingegen der oberflächen-spezifische photoakustische Effekt beigezogen. Derselbe

beruht darauf, dass sich bei Lichtabsorption die Oberfläche und die sich unmittelbar darüber befindliche Luftschicht erwärmt. Diese Lufterwärmung führt zu einer Ausdehnung und somit im Falle einer modulierten Lichtanregung zu einer alternierenden Expansion und Kontraktion der Luftschicht unmittelbar über der lichtabsorbierenden Oberfläche. Die dadurch erzeugten Schallwellen können als oberflächenspezifisches photoakustisches Signal gemessen werden. Dieses Signal ist, ebenso wie das gasabsorptionsbedingte, proportional zur Lichtquellenintensität. Es kann somit zur Referenzmessung verwendet werden.

Es ist lediglich zu vermeiden, dass eine Überlagerung des gasspezifischen photoakustischen Effektes des Probegases mit dem gasunspezifischen photoakustischen Effekt der Oberfläche auftritt. Die Entkopplung der beiden Effekte kann erreicht werden, indem vorerst ein Monochromator-Element, beispielsweise ein Interferenzfilter 36, in den Strahlengang 14 gebracht wird, das der lichtabsorbierenden Gasart angepasst ist. Gleichzeitig ist dafür gesorgt, dass wenig Licht von der Absorberfläche 37 absorbiert wird. Anschliessend wird ein Monochromator-Element 36' in den Strahlengang gebracht, dessen Transmissionsbereich nicht mit einem Absorptionsgebiet des Messgases in der Gasküvette 68 zusammenfällt. Gleichzeitige Massnahmen sorgen dafür, dass möglichst viel Licht von der Absorberfläche 37 absorbiert wird. Mittels des Mikrophones 69 kann somit vorerst die Messgaskonzentration (Fig. 20a, Fig. 21a) und anschliessend die Lichtquellen-Intensität (Fig. 20b, Fig. 21b) ermittelt werden.

Nach der Darstellung von Fig. 20 wird die Umstellung von der einen zur anderen Messung durch den Filterwechsel 36, 36' und ein bezüglich des einfallenden Lichtes Parallel- resp. Querstellen der Platte 39 mit der Absorberfläche 37 erreicht. Nachteilig bei dieser Anordnung ist der mechanische Eingriff in der photoakustischen Zelle 68.

In dieser Hinsicht günstiger ist die Vorrichtung, wie sie in Fig. 21 dargestellt ist. Während der Gaskonzentrations-Messung wird der Lichtstrahl 14 als seitlich eng begrenztes Bündel in die photoakustische Zelle 68 geführt. Am Mikrophon 69 wird somit ein Signal gemessen, das zur Gaskonzentration in der Zelle 68 korrespondiert. Anschliessend wird nebst des Monochromator-Elementes 36' ein lichtstrahlerweiterndes oder lichtstrahl-streuendes Element 38 in den Strahlengang gebracht, sodass ein Teil des Lichtes im Innern der photoakustischen Zelle 68 auf eine seitlich des Hauptstrahles 14, beispielsweise ringförmige Scheibe 39' mit der Absorberfläche 37 fällt.

Auf die geometrische Lichtstrahlveränderungen durch das Element 38 und die bezüglich des Lichtstrahls seitliche Anordnung der Absorberfläche 37 kann allenfalls verzichtet werden, wenn dafür gesorgt wird, dass das Messgas in der Zelle 68 und die Absorberfläche 37 in möglichst nicht überlappenden spektralen Gebieten Licht absorbieren und die Monochromator-Elemente 36, 36' entsprechend gewählt werden. In diesem Fall kann die Absorberfläche 37 beispielsweise direkt an der Rückwand der photoakustischen Zelle 68 angebracht werden. Für diesen Zweck kann sich ein selektiver Lichtabsorber, der im infraroten Spektralbereich gut reflektiert, hingegen im Sichtbaren viel Licht absorbiert, als Absorberfläche 37 eignen.

Abschliessend soll mit Nachdruck betont werden, dass es für das Funktionieren der besprochenen Lichtreflektor-Vorrichtungen von Fig. 3 - Fig. 18 wesentlich ist, dass ein planer Reflektor existiert, welcher das Licht wieder in die Quelle zurückwirft, dass die Lichtquelle für die emittierte Strahlung teilweise transparent ist und dass der hintere, der Lichtaustrittsöffnung gegenüberliegende, Bereich des Reflektors ein gutes Reflexionsvermögen aufweist und nicht durch die Aufhängung der Quelle verdeckt ist.

## Patentansprüche

1. Vorrichtung zur Sammlung der Strahlung einer Lichtquelle (20, 21), die im Brennpunkt eines Rotationsellipsoids (10') bzw. in der Brennlinie (51) eines elliptischen Teilzylinders (50'), die einen Hohlreflektor bilden, angeordnet ist, wobei der Hohlreflektor durch einen zusätzlichen planen Reflektor (40, 54, 54') abgeschlossen ist, der das Rotationsellipsoid bzw. den elliptischen Teilzylinder in der Ebene der kurzen Hauptachse teilt,
dadurch gekennzeichnet, dass im planen Reflektor am Durchstosspunkt der langen Hauptachse eine Öffnung (41, 42, 56') zur Auskopplung des gebündelten Lichts vorgesehen ist.

2. Vorrichtung zur Sammlung der Strahlung einer Lichtquelle (20, 21), die im Brennpunkt eines Rotationsparaboloids (80) bzw. in der Brennlinie eines parabolischen Teilzylinders (88), die einen Hohlreflektor bilden, angeordnet ist,
dadurch gekennzeichnet, dass der Hohlreflektor durch einen zusätzlichen planen Reflektor (40, 54, 54') abgeschlossen ist, und dass im planen Reflektor am Durchstosspunkt der Achse des Hohlreflektors eine Öffnung (41, 42, 56') für die Auskopplung des gebündelten Lichtes vorgesehen ist, deren Radius bzw. Höhe der Höhe des Auftreffpunktes eines von der Lichtquelle (81) senkrecht zur Achse ausgehenden Lichtstrahls auf der Oberfläche des Hohlreflektors entspricht.

3. Vorrichtung nach Anspruch 1 oder 2, dadurch gekennzeichnet, dass die Lichtquelle (20) mittels einer Wendel spotförmig ausgebildet und in einer Zone um den Brennpunkt angeordnet ist, oder dass die Lichtquelle (20) draht- oder wendelförmig ausgebildet und im Bereich des Brennpunkts entlang der Rotationsachse angeordnet ist.

4. Vorrichtung nach Aspruch 1 oder 2, dadurch gekennzeichnet, dass der Hohl-Reflektor (50', 88) Teil eines Zylinders (50', 88) ist und die Lichtquelle (21) band-, draht- oder wendelförmig ausgebildet und in einer Zone um die Brennlinie oder in der Zylinderachse angeordnet ist.

5. Vorrichtung nach einem der Ansprüche 1 oder 2, dadurch gekennzeichnet, dass am zylinderförmigen Kohl-Reflektor (50', 88) zusätzliche Seiten-Reflektoren (57, 57') derart angeordnet sind, dass sie im wesentlichen quer zum planen Reflektor (40, 54, 54') stehen.

6. Vorrichtung nach Anspruch 5, dadurch gekennzeichnet, dass die Seiten-Reflektoren (57, 57') sich nicht bis in den Bereich des planen Reflektors (40, 54, 54') erstrecken und zwischen diese und den Seiten-Reflektoren einen spalt (55, 55') freilassen.

7. Vorrichtung nach den Ansprüchen 5 oder 6, dadurch gekennzeichnet, dass die Seiten-Reflektoren (57, 57') plan sind und orthogonal zur Zylinderachse stehen.

8. Vorrichtung nach den Ansprüchen 5 oder 6, dadurch gekennzeichnet, dass die Seiten-Reflektoren (57, 57') plan sind und zur Zylinderachse geneigt stehen.

9. Vorrichtung nach Anspruch 5, dadurch gekennzeichnet, dass die Seiten-Reflektoren (57, 57') gut sind.

10. Vorrichtung nach Anspruch 9, dadurch gekennzeichnet, dass bei elliptischer Zylinderkrümmung des Hohl-Reflektors (50') die Seiten-Reflektoren (57, 57') eine zylindrischparabolische Krümmung (88) und bei parabolischer Zylinderkrümmung des Hohlreflektors (88) die Seiten-Reflektoren (57, 57') eine zylindrisch-elliptische Krümmung aufweisen.

11. Vorrichtung nach Anspruch 10 dadurch gekennzeichnet, dass der Übergang vom zylinderförmigen Hohl-Reflektor (50', 88) zu den Seiten-Reflektoren (57, 57') ein kontinuierlicher ist.

12. Vorrichtung nach Anspruch 1 oder 2, dadurch gekennzeichnet, dass zwischen der Lichtquelle (20, 21) und dem planen Reflektor (40, 54, 54') ein Körper (30, 60) angeordnet ist.

13. Vorrichtung nach Anspruch 12, dadurch gekennzeichnet, dass der Körper (30) vorwiegend lichtbrechende Eigenschaften aufweist.

14. Vorrichtung nach Anspruch 12, dadurch gekennzeichnet, dass der Körper (60) lichtabsorbierende und allenfalls partiell reflektierende Eigenschaften aufweist.

15. Vorrichtung nach Anspruch 14, dadurch gekennzeichnet, dass der lichtabsorbierende Körper (60) eine mit einem Messgas gefüllte Küvette ist, deren Inhalt über mit der Küvette verbundenen Zuleitungen (63, 63') austauschbar ist.

16. Messvorrichtung, enthaltend eine Vorrichtung nach Anspruch 1 oder 2, dadurch gekennzeichnet, dass im durch die Öffnung (41, 42, 56, 56') im planen Reflektor (40, 54, 54') ausgekoppelten Lichtstrahl ein Körper (30, 60, 64, 67, 68, 68') angeordnet ist.

17. Messvorrichtung nach Anspruch 16, dadurch gekennzeichnet, dass der mit dem Licht in Wechselwirkung stehende Körper (67, 68, 68') lichtabsorbierende und allenfalls partiell reflektierende Eigenschaften aufweist.

18. Messvorrichtung nach Anspruch 17, dadurch gekennzeichnet, dass der mit dem Licht in Wechselwirkung stehende Körper (67, 68, 68') eine mit einem Messgas gefüllte Küvette ist, deren Inhalt über mit der Küvette verbundenen Zuleitungen (63, 63') austauschbar ist.

19. Messvorrichtung nach einem der Ansprüche 17 und 18, dadurch gekennzeichnet, dass der mit dem Licht in Wechselwirkung stehende Körper (67, 68, 68') nebst dem das Licht absorbierende Medium eine fest angeordnete (39') oder mechanisch bewegbare (39) Vorrichtung mit einer lichtabsorbierenden Schicht (37) aufweist.

20. Messvorrichtung nach Anspruch 19, dadurch gekennzeichnet, dass der lichtabsorbierende Körper (67, 68') eine Kaküvette (67, 68, 68') und das lichtabsorbierende Medium ein Gas ist.

21. Messvorrichtung nach den Ansprüchen 18, 19 oder 20, dadurch gekennzeichnet, dass im durch die Vorrichtung zur Sammlung der Strahlung erzeugten Lichtstrahl sich ein monochromatisierendes (31, 33, 33', 33'', 34, 36, 36') und/oder die Lichtstrahlung ablenkendes (35, 38) Element befindet, das im Strahlengang fest angeordnet ist (31) oder auf einer rotierenden Scheibe (32) angeordnet und wahlweise in den Strahlengang einschiebbar ist.

22. Messvorrichtung nach Anspruch 21, dadurch gekennzeichnet, dass das monochromatisierende Element (31, 33, 33', 33'', 34, 36, 36') ein optischer Bandpassfilter ist, und das die Lichtstrahlung ablenkende Element (35, 38) ein lichtstreuender (38) und/oder ein lichbrechender (35, 38) Körper ist.

**Claims**

1. Apparatus for collecting the radiation of a light source (20, 21) arranged in the focus of an ellipsoid of revolution (10') or in the focal line (51) of an elliptic partial cylinder (50') forming a hollow reflector, the latter being teminated by an additional planar reflector (40, 54, 54'), which divides the ellipsoid of revolution or the elliptical partial cylinder in the plane of the short principal axis, characterized in that an opening (41, 42, 56') for the coupling out of the focussed light is provided in the reflector at the intersection point of the long principal.

2. Apparatus for collecting the radiation of a light source (20, 21) arranged in the focal point of a paraboloid of revolution (80) or in the focal line of a parabolic partial cylinder (88) forming a hollow reflector, characterized in that the hollow reflector is terminated by an additional planar reflector (40, 54, 54') and that an opening (41, 42, 56') is provided in the planar reflector at the intersection point of the axis of the hollow reflector for coupling out the focussed light and whose radius or height corresponds to the height of the fact point of a light beam emanating from the light source (81) at right angles to the axis on the surface of the hollow reflector.

3. Apparatus according to claims 1 or 2, characterized in that the light source (20) is constructed in spot-like manner by means of a coil and is arranged in an area around the focal point or that the light source (20) is constructed in wire-like or helical manner and is arranged in the vicinity of the focal point along the rotation axis.

4. Apparatus according to claims 1 or 2, characterized in that the hollow reflector (50', 88) is part of a cylinder (50', 88) and the light source (21) is constructed in band, wire or coil-like manner and is arranged in an area around the focal line or in the cylinder axis.

5. Apparatus according to one of the claims 1 or 2, chacterized in that additional lateral reflectors (57, 57') are arranged on the cylindrical hollow reflector (50', 88) in such a way that they are substantially at right angles to the planar reflector (40, 54, 54').

6. Apparatus according co claim 5, characterised in that the lateral reflectors (57, 57') do not extend into the vicinity of the planar reflector (40, 54, 54') and leave between the latter and the lateral reflectors a gap (55, 55').

7. Apparatus according to claims 5 or 6, characterised in that the lateral reflectors (57, 57') are planar and orthogonal to the cylinder axis.

8. Apparatus according to claims 5 or 6, characterised in that the lateral reflectors (57, 57') are planar and are inclined with respect to the cylinder axis.

9. Apparatus according to claim 5, characterised in that the lateral reflectors (57, 57') are curved.

10. Apparatus according to claim 9, characterised in that in the case of an elliptical cylinder curvature of the hollow reflector (50'), the lateral reflectors (57, 57') have a cylindrical-parabolic curvature (88) and in the case of a parabolic cylinder curvature of the hollow reflector (88) the lateral reflectors (57, 57') have a cylindrical-elliptical curvature.

11. Apparatus according to claim 10, characterised in that the transition from the cylindrical hollow reflector (50', 88) to the lateral reflectors (57, 57') is continuous.

12. Apparatus according to claims 1 or 2, characterised in that a body (30, 60) is arranged between the light source (20, 21) and the planar reflector (40, 54, 54').

13. Apparatus according to claim 12, characterised in that the body (30) mainly has light refracting characteristics.

14. Apparatus according to claim 12, characterised in that the body (60) has light-absorbing and partly reflecting characteristics.

15. Apparatus according to claim 14, characterised in that the light-absorbing body (60) is a cell filled with a measurement gas and its content can be interchanged by means of the feed lines (63, 63') connected to the cell.

16. Measuring apparatus containing the apparatus according co claim 1 or 2, characterized in that a body (30, 60, 64, 67, 68, 68') is arranged in the light beam coupled out through the opening (41, 42, 56, 56') in the planar reflector (40, 54, 54').

17. Measuring apparatus according to claim 16, characterized in that the body (67, 68, 68') interacting with the light has light-absorbing and partly reflecting chacteristics.

18. Measuring apparatus according to claim 17, characterized in that the body (67, 68, 68') interacting with the light is a cell filled with a measurement gas and its content can be interchanged via feed lines (63, 63') connected to the cell.

19. Measuring apparatus according to one of the claims 17 and 18, characterized in that the body (67, 68, 68') interacting with the light, apart from the light-absorbing medium, has a fixedly arranged (39') or mechanically movable (39) device with a light-absorbing layer (37).

20. Measuring apparatus according to claim 19, characterized in that the light-absorbing body (67, 68') is a gas cell (67, 68, 68') and the light-absorbing media is a gas.

21. Measuring apparatus according to claims 18, 19 or 20, characterized in that in the light beam produced by the device for collecting the radiation is located a monochromatizing (31, 33, 33', 33'', 34, 36, 36') and/or light radiation-deflecting (35, 38) element, which is feed in the optical path (31) or is arranged on a rotating disk (32) and can be optionally inserted in the optical path.

22. Measuring apparatus according to claim 21, characterized in that the monochromatizing element (31, 33, 33', 33'', 34, 36, 36') is an optical band pass filter and that the light radiation-deflecting element (35, 38) is a light-scattering (38) and/or a light-refracting (35, 38) body.

## Revendications

1. Dispositif pout collecter le rayonnement d'une source lumineuse (20, 21) placée au foyer d'un ellipsoïde de rotation (10') ou sur la ligne focale (51) d'une partie de cylindre elliptique (50') en formant un réflecteur creux, ce réflecteur étant fermé par un réflecteur plan complémentaire (40, 54, 54') qui divise l'ellipsoïde de rotation ou la partie de cylindre elliptique dans le plan du petit axe principal, dispositif caractérisé en ce que dans le réflecteur plan, au point d'intersection du grand axe principal, il est prévu une ouverture (41, 52, 56') pour le découplage du faisceau lumineux regroupé.

2. Dispositif pour collecter le rayonnement d'une source lumineuse (20, 21) placée au foyer d'un paraboloïde de rotation (80 ou sur la ligne focale d'une partie de cylindre parabolique (88) formant un réflecteur creux, caractérisé en ce que le réflecteur creux est fermé par un réflecteur plan complémentaire (40, 54, 54') et en ce que dans le réflecteur plan, au point d'intersection de l'axe du réflecteur plan, il est prévu une ouverture (41, 42, 56') pour le découplage de la lumière regroupée, orifice dont le rayon ou l'intervalle d'une hauteur à l'autre du point d'intersection d'un faisceau lumineux émis par la source lumineuse (81) perpendiculairement à l'axe correspond à la surface du réflecteur creux.

3. Dispositif selon la revendication 1 ou 2, caractérisé en ce que la source lumineuse (20) est constituée par une spirale ponctuelle et est placée dans la zone entourant le foyer ou en ce que la source lumineuse (20) est filiforme ou hélicoïdale et est placée au niveau du foyer, le long de l'axe de rotation.

4. Dispositif selon la revendication 1 ou la revendication 2, caractérisé en ce que le réflecteur creux (50', 88) fait partie d'un cylindre (50', 88) et en ce que la source lumineuse (20) est en forme de bande, de fil ou de forme hélicoïdale et est placée dans une zone entourant la ligne focale ou l'axe du cylindre.

5. Dispositif selon l'une des revendications 1 ou 2, caractérisé en ce que des réflecteurs latéraux complémentaires (57, 57') sont prévus sur le réflecteur creux de forme cylindrique (50', 88), réflecteurs latéraux qui sont essentiellement disposés transversalement par rapport au réflecteur plan (40, 54, 54').

6. Dispositif selon la revendication 5, caractérisé en ce que les réflecteurs latéraux (57, 57') n'arrivent pas jusqu' au niveau des réflecteurs plans (40, 54, 54') et laissent subsister un intervalle (55, 55') entre ce réflecteur et les réflecteurs latéraux.

7. Dispositif selon les revendications 5 ou 6, caractérisé en ce que les réflecteurs latéraux (57, 57') sont plans et sont disposés perpendiculairement à l'axe du cylindre.

8. Dispositif selon les revendications 5 ou 6, caractérisé en ce que les réflecteurs latéraux (57, 57') sont plans et sont inclinés par rapport à l'axe du cylindre.

9. Dispositif selon la revendication 5, caractérisé en ce que les réflecteurs latéraux (57, 57') sont courbés.

10. Dispositif selon la revendication 9, caractérisé en ce que pour la courbure cylindrique elliptique du réflecteur creux (50'), les réflecteurs latéraux (57, 57') ont une courbure parabolique cylindrique (8) et pour une courbure cylindrique parabolique du réflecteur creux (88), les réflecteurs latéraux (57, 57') ont une courbure elliptique cylindrique.

11. Dispositif selon la revendication 10, caractérisé en ce que la transition entre le réflecteur creux cylindrique (50', 88) et les réflecteurs latéraux (57, 57') est continue.

12. Dispositif selon la revendication 1 ou 2, caractérisé par un corps (30, 60) placé entre la source lumineuse (20, 21) et le réflecteur plan (40, 54, 54').

13. Dispositif selon la revendication 12, caractérisé en ce que le corps (30) a des caractéristiques principalement de réfraction de lumière.

14. Dispositif selon la revendication 12, caractérisé en ce que le corps (60) a des caractéristiques d'absorption lumineuses et dans tous les cas des caractéristiques de réflexion partielles.

15. Dispositif selon la revendication 14, caractérisé en ce que le corps absorbant la lumière (60) est une cuvette remplie d'un gaz de mesure dont le contenu peut être échangé par des conduites d'alimentation (63, 63') reliées à la cuvette.

16. Dispositif de mesure comportant un dispositif selon la revendication 1 ou 2, caractérisé par un corps (30, 60, 64, 67, 68, 68') placé dans le faisceau lumineux découplé à travers l'ouverture (41, 42, 56, 56') du réflecteur plan (40, 54, 54').

17. Dispositif de mesure salon la revendication 16, caractérisé en ce que le corps (67, 68, 68') coopérant de manière alternée avec la lumière présente des caracteristiques d'absorption de la lumière et dans tous les cas des caractéristiques de réflexion partielles.

18. Dispositif de mesure selon la revendication 17, caractérisé en ce que le corps (67, 68, 68') coopérant de manière alternée avec la lumière est une cuvette remplie d'un gaz de mesure dont le contenu peut être échangé par des conduites d'alimentation (63, 63') reliées à la cuvette.

19. Dispositif de mesure selon l'une des revendications 17 et 18, caractérisé en ce que le corps (67, 68, 68') coopérant de manière alternée avec la lumière ainsi que le milieu absorbant la lumière comprend un dispositif (39') monté de manière fixe ou un dispositif (39) mobile mécaniquement et ayant une couche (37) absorbant la lumière.

20. Dispositif de mesure selon la revendication 19, caractérisé en ce que le corps absorbant la lumière (67, 68') est une cuvette de gaz (67, 68, 68') et le milieu absorbant la lumière est un gaz.

21. Dispositif de mesure selon les revendications 18, 19 ou 20, caractérisé par un élément a effet monochromatique (31, 33, 33', 33'' 34, 36, 36') et/ou de déviation de lumière (35, 38) placé dans le faisceau lumineux formé par le dispositif collecteur de rayonnement et cet élément placé de manière fixe (31) dans le chemin du faisceau ou est placé (32) sur un disque rotatif et peut s'introduire sélectivement dans le chemin du faisceau.

22. Dispositif de mesure selon la revendication 21, caractérisé en ce que l'élément à effet monochromatique (31, 33, 33', 33'', 34, 36, 36') est un filtre optique à bande passante et l'élément de déflexion du faisceau lumineux (35, 38) est un corps dispersant la lumière (38) et/ou à réfraction (35, 38).

**Fig. 9**

54

51

21

23

59

54'

50'

**Fig. 10**

54

21

23

24

54'

50'

**Fig. 11**

86

40

35

36

83

81  84  41,42

85  20

82

80

**Fig. 12**

57  57'  55'

54

89

21

56'

23

54'

55

88

**Fig. 13**

44"

88

56"

58"

51

21

23

50'

3

Fig. 14

Fig. 15

Fig. 16

Fig. 17

Fig. 18

Fig. 19

Fig. 20

a)

b)

Fig. 21

a)

b)